# EUROPEAN PATENT APPLICATION

(11) **EP 4 745 876 A1**
(43) Date of publication of application: **20.05.2026**
(21) Application number: 24856742.2
(22) Date of filing: 16.08.2024
(51) Int. Cl.: G06T 5/90, G06T 13/80, G06F 3/0484, G06F 16/78, G06T 5/50

(54) **ELECTRONIC DEVICE FOR PROVIDING HDR IMAGE CONTENT AND OPERATION METHOD THEREOF**

(30) Priority: 18.08.2023 KR 20230108272; 13.06.2024 KR 20240076956
(71) Applicant: Samsung Electronics Co., Ltd., Suwon-si, Gyeonggi-do 16677 (KR)
(72) Inventor: NOH, Euihwa, Suwon-si Gyeonggi-do 16677 (KR); PARK, Kyoungkeun, Suwon-si Gyeonggi-do 16677 (KR); PARK, Jiyoon, Suwon-si Gyeonggi-do 16677 (KR); KIM, Bosung, Suwon-si Gyeonggi-do 16677 (KR); RYU, Janghee, Suwon-si Gyeonggi-do 16677 (KR)
(74) Representative: Nederlandsch Octrooibureau
(86) International application number: PCT/KR2024/012163
(87) International publication number: WO 2025/042130

(57) **Abstract**

An electronic device according to an embodiment may comprise: a memory for storing animation content composed of a plurality of image frames; a display module for displaying the animation content, and providing a user interface so that any one of the plurality of image frames is selected; and at least one processor electrically connected to the memory and the display module. The at least one processor may: store a first image frame selected from among the plurality of image frames in the memory; obtain characteristic information of an object belonging to the first image frame; on the basis of the characteristic information, determine at least one candidate image frame excluding the first image frame from among the plurality of image frames; generate a recovery map on the basis of the characteristic information and the at least one candidate image frame; and provide a second image frame obtained by applying the recovery map to the first image frame.

## Description

### [Technical Field]

The disclosure relates to an electronic device for providing a high dynamic range image (HDR) and a method thereof.

### [Background Art]

An electronic device including a camera may perform various types of processing through an image signal processor to improve an image acquired through the camera. For example, the image signal processor may perform high dynamic range (HDR) on an image to improve image quality by increasing the dynamic range of a signal acquired from an image sensor.

HDR may be performed by determining raw data obtained from an image sensor and an image quality control value (e.g., a brightness adjustment value and a white balance adjustment value) for an image scene, generating a recovery map based on a difference between an initial value of the raw data and the control value, and applying the recovery map to a stored image that has been subjected to processing such as resizing in an electronic device.

As described above, since HDR for an image requires raw data, HDR is not applicable to an image frame included in a video or to an image that is stored without considering HDR when the image is initially acquired.

### [Disclosure of Invention]

### [Solution to Problem]

According to an embodiment, an electronic device may include a memory configured to store animation content including multiple image frames, a display module configured to display the animation content and provide a user interface through which one of the multiple image frames is selected, and at least one processor electrically connected to the memory and the display module. The at least one processor may store, in the memory, a first image frame selected from among the multiple image frames, obtain characteristic information of an object included in the first image frame, determine, based on the characteristic information, at least one candidate image frame from among the multiple image frames, the at least one candidate image being other than the first image frame, generate a recovery map based on the characteristic information and the at least one candidate image frame, and provide a second image frame obtained by applying the recovery map to the first image frame.

According to an embodiment, a method of operating an electronic device may include providing animation content including multiple image frames, storing a first image frame selected from among the plurality of image frames, obtaining characteristic information of an object included in an image frame, determining, based on the characteristic information, at least one candidate image frame from among the multiple image frames, the at least one candidate image being other than the first image frame, generating a recovery map based on the characteristic information and the at least one candidate image frame, and providing a second image frame obtained by applying the recovery map to the first image frame.

### [Brief Description of Drawings]

FIG. 1 is a block diagram of an electronic device in a network environment according to various embodiments.
FIG. 2 is a block diagram of a camera module according to various embodiments;
FIG. 3 illustrates a configuration of an electronic device configured to provide HDR content according to various embodiments.
FIG. 4 is a flowchart illustrating a method of operating an electronic device according to an embodiment.
FIG. 5 is a flowchart illustrating a method of processing a first image frame in a method of operating an electronic device according to an embodiment.
FIG. 6 is a flowchart illustrating a method of generating a recovery map in a method of operating an electronic device according to an embodiment.
FIG. 7 is a flowchart illustrating a method of modifying a first image frame in a method of operating an electronic device according to an embodiment.
FIG. 8 is a diagram referenced to describe FIG. 7 in further detail.
FIG. 9 is a flowchart illustrating a method of converting a recovery map in a method of operating an electronic device according to an embodiment.
FIG. 10 is a flowchart illustrating a method of generating HDR content in a method of operating an electronic device according to an embodiment.
FIG. 11 is a flowchart illustrating a method of providing HDR content in a method of operating an electronic device according to an embodiment.
FIG. 12 illustrates an example of a second image frame in HDR content according to an embodiment.
FIG. 13 illustrates an example of step-by-step adjustment of a second image frame in HDR content according to an embodiment.

### [Mode for the Invention]

Hereinafter, exemplary embodiments of the disclosure will be described in detail with reference to the accompanying drawings. The advantages and features of the present disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements.

Unless defined otherwise, all terms (including technical and scientific terms) used herein have the same meaning as those commonly understood by a person skilled in the art to which the present disclosure pertains. Also, such terms as those defined in a generally used dictionary are not to be interpreted to have ideal or excessively formal meanings unless specially defined herein. The terms used in the present disclosure are merely used to describe embodiments, and are not intended to limit the present disclosure. In the specification, a singular expression may include a plural expression unless specially mentioned in a phrase.

As used herein, the expressions "comprise" and/or "comprising" are intended to specify the existence of mentioned components, steps, operations, and/or elements, and do not preclude the existence or addition of one or more other components, steps, operations, and/or elements.

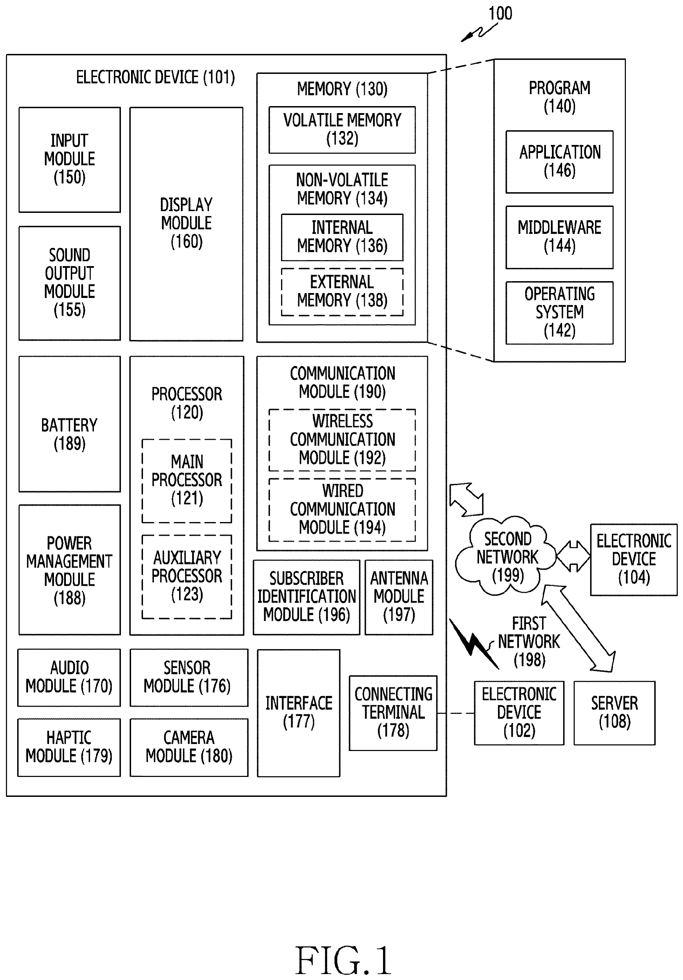

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

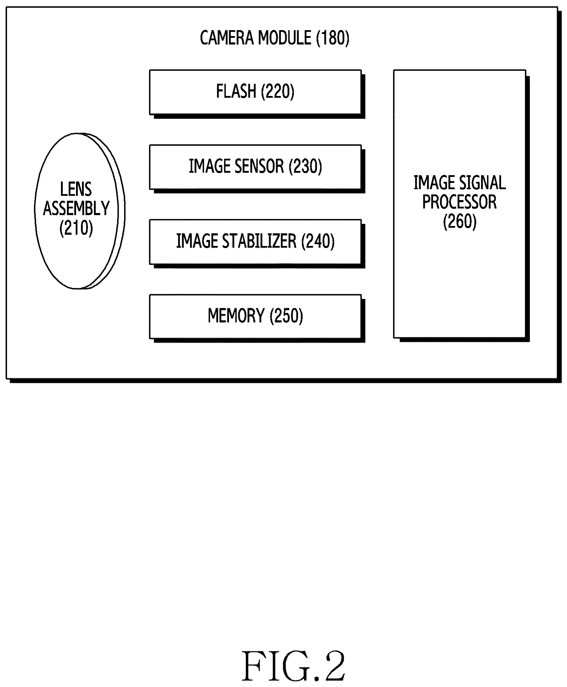

Fig. 2 is a block diagram 200 illustrating the camera module 180 according to various embodiments. Referring to Fig. 2, the camera module 180 may include a lens assembly 210, a flash 220, an image sensor 230, an image stabilizer 240, memory 250 (e.g., buffer memory), or an image signal processor 260. The lens assembly 210 may collect light emitted or reflected from an object whose image is to be taken. The lens assembly 210 may include one or more lenses. According to an embodiment, the camera module 180 may include a plurality of lens assemblies 210. In such a case, the camera module 180 may form, for example, a dual camera, a 360-degree camera, or a spherical camera. Some of the plurality of lens assemblies 210 may have the same lens attribute (e.g., view angle, focal length, auto-focusing, f number, or optical zoom), or at least one lens assembly may have one or more lens attributes different from those of another lens assembly. The lens assembly 210 may include, for example, a wide-angle lens or a telephoto lens.

The flash 220 may emit light that is used to reinforce light reflected from an object. According to an embodiment, the flash 220 may include one or more light emitting diodes (LEDs) (e.g., a red-green-blue (RGB) LED, a white LED, an infrared (IR) LED, or an ultraviolet (UV) LED) or a xenon lamp. The image sensor 230 may obtain an image corresponding to an object by converting light emitted or reflected from the object and transmitted via the lens assembly 210 into an electrical signal. According to an embodiment, the image sensor 230 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 230 may be implemented using, for example, a charged coupled device (CCD) sensor or a complementary metal oxide semiconductor (CMOS) sensor.

The image stabilizer 240 may move the image sensor 230 or at least one lens included in the lens assembly 210 in a particular direction, or control an operational attribute (e.g., adjust the read-out timing) of the image sensor 230 in response to the movement of the camera module 180 or the electronic device 101 including the camera module 180. This allows compensating for at least part of a negative effect (e.g., image blurring) by the movement on an image being captured. According to an embodiment, the image stabilizer 240 may sense such a movement by the camera module 180 or the electronic device 101 using a gyro sensor (not shown) or an acceleration sensor (not shown) disposed inside or outside the camera module 180. According to an embodiment, the image stabilizer 240 may be implemented, for example, as an optical image stabilizer. The memory 250 may store, at least temporarily, at least part of an image obtained via the image sensor 230 for a subsequent image processing task. For example, if image capturing is delayed due to shutter lag or multiple images are quickly captured, a raw image obtained (e.g., a Bayer-patterned image, a high-resolution image) may be stored in the memory 250, and its corresponding copy image (e.g., a low-resolution image) may be previewed via the display module 160. Thereafter, if a specified condition is met (e.g., by a user's input or system command), at least part of the raw image stored in the memory 250 may be obtained and processed, for example, by the image signal processor 260. According to an embodiment, the memory 250 may be configured as at least part of the memory 130 or as a separate memory that is operated independently from the memory 130.

The image signal processor 260 may perform one or more image processing with respect to an image obtained via the image sensor 230 or an image stored in the memory 250. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 260 may perform control (e.g., exposure time control or read-out timing control) with respect to at least one (e.g., the image sensor 230) of the components included in the camera module 180. An image processed by the image signal processor 260 may be stored back in the memory 250 for further processing, or may be provided to an external component (e.g., the memory 130, the display module 160, the electronic device 102, the electronic device 104, or the server 108) outside the camera module 180. According to an embodiment, the image signal processor 260 may be configured as at least part of the processor 120, or as a separate processor that is operated independently from the processor 120. If the image signal processor 260 is configured as a separate processor from the processor 120, at least one image processed by the image signal processor 260 may be displayed, by the processor 120, via the display module 160 as it is or after being further processed.

According to an embodiment, the electronic device 101 may include a plurality of camera modules 180 having different attributes or functions. In such a case, at least one of the plurality of camera modules 180 may form, for example, a wide-angle camera and at least another of the plurality of camera modules 180 may form a telephoto camera. Similarly, at least one of the plurality of camera modules 180 may form, for example, a front camera and at least another of the plurality of camera modules 180 may form a rear camera.

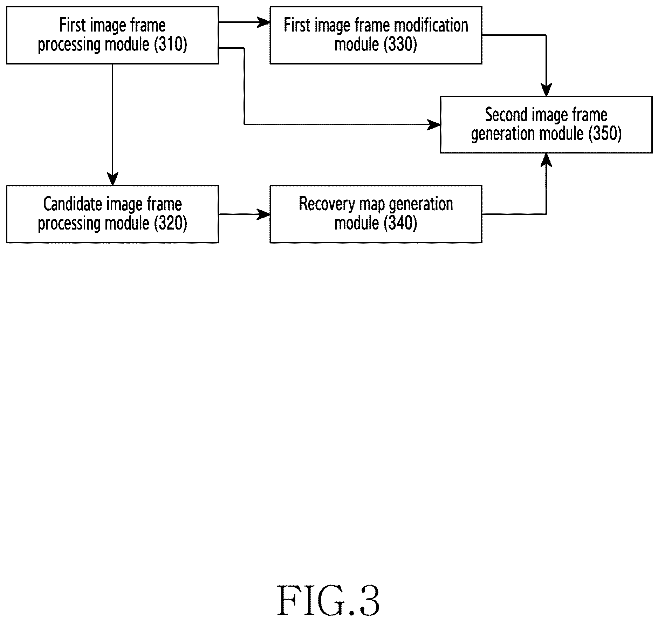

FIG. 3 illustrates a configuration of an electronic device configured to provide HDR content according to various embodiments, and is a control block diagram in which processors 120, 260 are classified according to functions and operations.

Referring to FIG. 3, the electronic device 101 according to an embodiment includes a first image frame processing module (or unit) 310, a candidate image frame processing module (or unit) 320, a first image frame modification module (or unit) 330, a recovery map generation module (or unit) 340, and a second image frame generation module (or unit) 350.

The first image frame processing module 310 may analyze an image scene included in a first image frame selected according to a user or application configuration, extract at least one object, and obtain characteristic information of the object.

The first image frame corresponds to a target image for providing HDR content provided by the disclosure, which is selected from animation content composed of multiple image frames. The animation content is various dynamic images stored in the electronic device 101, and the animation content may include a video file, a graphics interchange format (GIF) file, or a motion photo. The multiple image frames constituting the animation content commonly include data that has undergone resizing or scaling processing at an initial storage stage, and thus include relatively less information than raw data acquired from an image sensor 230.

According to an embodiment, the first image frame processing module 310 may select the first image frame and process the first image frame to extract characteristic information of an object. According to an embodiment, the characteristic information may provide recovery data for generating a recovery map.

According to an embodiment, the first image frame processing module 310 may obtain size information of an object in the first image frame. According to an embodiment, the first image frame processing module 310 may obtain edge information of an object in the first image frame. According to an embodiment, the first image frame processing module 310 may obtain at least one of saturation information or brightness information of an object in the first image frame.

In addition, according to an embodiment, the first image frame processing module 310 may obtain attribute information of the extracted object. For example, the first image frame processing module 310 may obtain attribute information that enables distinguishing whether the extracted object is a human face or an animal based on an image recognition algorithm such as computer vision.

In addition, according to an embodiment, the first image frame processing module 310 may obtain metadata of the animation content. For example, the first image frame processing module 310 may further obtain metadata including a timestamp, location information, or audio information in order to be referenced in a subsequent recovery map generation process.

According to an embodiment, the first image frame processing module 310 may obtain segment-specific exposure values for a selected object. In addition, according to an embodiment, the first image frame processing module 310 may obtain segment-specific saturation values for the selected object. In addition, according to an embodiment, the first image frame processing module 310 may obtain sharpness information of a periphery of the selected object.

According to an embodiment, the first image frame processing module 310 may determine an object of the first image frame based on audio information in metadata of the animation content. For example, when the animation content is a video, the first image frame processing module 310 according to an embodiment may determine a main object in the image frame by referring to audio information without relying on a user selection.

In addition, according to an embodiment, the first image frame processing module 310 may determine a saturation level or a brightness level to be applied to an object by referring to location information in metadata of the animation content. For example, the first image frame processing module 310 may identify that a location where the object is captured is an area having a high amount of sunlight by referring to location information, and may thereafter generate a recovery map for providing high brightness to a second image frame provided in HDR content.

The candidate image frame processing module 320 determines at least one candidate image frame from among multiple image frames excluding the first image frame, based on the object extracted by the first image frame processing module 310. The candidate image frame processing module 320 may determine whether the same object exists in other image frames based on a shape of the object cropped by the first image frame processing module 310. According to an embodiment, the candidate image frame processing module 310 may determine, among multiple image frames (excluding the first image frame) in which the same object as the object extracted from the first image frame exists, an image frame having a large brightness difference (or saturation difference) from the object extracted from the first image frame, an image frame having a large motion change with respect to the object extracted from the first image frame, or an image frame including a sharp portion of the object extracted from the first image frame, as a candidate image frame.

The candidate image frame processing module 320 determines the candidate image frame and transfers at least one determined candidate image frame to the recovery map generation module 340. By transferring at least one candidate image frame to the recovery map generation module 340, the candidate image frame processing module 320 enables the recovery map generation module 340 to obtain recovery data corresponding to segment-specific difference values of image frames.

The first image frame modification module 330 may modify or replace the first image frame selected by a user. That is, the first image frame modification module 330 may perform a preprocessing operation for improving the first image frame, which is a target image of HDR content. According to an embodiment, the first image frame modification module 330 may modify the first image frame in order to improve image resolution through deep learning using a convolutional neural network (CNN) system. In addition, the first image frame modification module 330 may modify the first image frame by compositing the first image frame with at least one image frame among the multiple image frames.

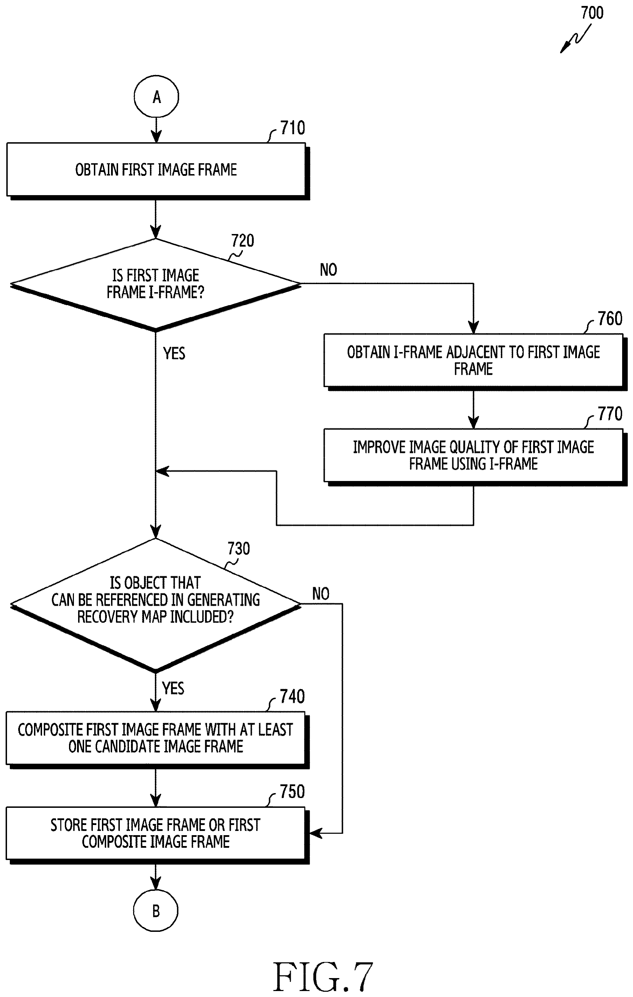

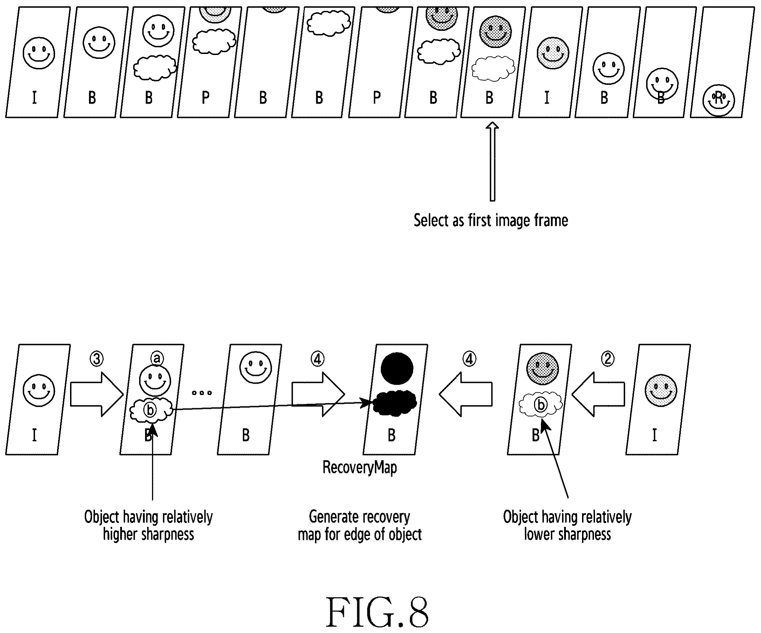

In addition, when the animation content includes multiple image frames provided in a format of intra frames (I-frames), predicted frames (P-frames), and bidirectional frames (B-frames), the first image frame modification module 330 may modify the first image frame. For example, when a user selects a P-frame or a B-frame as the first image frame from among the multiple image frames, the first image frame modification module 330 may replace the selected image frame with an image of a corresponding I-frame or may modify the selected image frame by referring to the I-frame. A more detailed process will be described with reference to FIGS. 7 and 8.

The recovery map generation module 340 may generate a recovery map based on characteristic information and at least one candidate image frame. The characteristic information is used to generate a characteristic difference value, which is a difference of an object included in image frames, and may include at least one of size information of the object, edge information of the object, saturation information of the object, or brightness information of the object.

In addition, when the animation content is a video file, the recovery map generation module 340 may generate a recovery map by further referring to metadata.

The second image frame generation module 350 may apply the newly generated recovery map to the first image frame to generate a second image frame to which HDR is applied. The second image frame generation module 350 may store the first image frame and the recovery map as data in accordance with a Photo-HDR format or a JPEG-R format to provide HDR content.

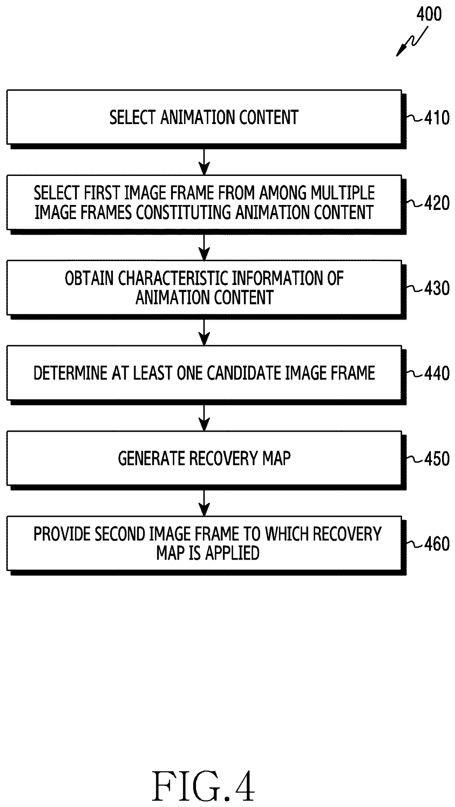

FIG. 4 is a flowchart 400 illustrating a method of operating an electronic device according to an embodiment.

According to an embodiment, the electronic device 101 receives an input for selecting animation content while an application is being executed (410). In the embodiment, the application is a program for providing HDR content, and may provide a user interface that allows a user to select one of various animation contents stored in a memory 130. Through the application, the user may select a target image (a first image frame) from the animation content and receive a result image (a second image frame) obtained by applying an HDR effect to the target image.

According to an embodiment, the electronic device 101 receives an input for selecting a first image frame from among multiple image frames constituting the animation content (420). For example, the electronic device 101 may provide a user interface that arranges the multiple image frames in a time order to allow the user to select one of the multiple image frames. As another example, the electronic device 101 may receive a user input for selecting one of the multiple image frames by providing a user interface such as a slider bar to the user.

According to an embodiment, the animation content may include multiple images arranged in frames according to a predetermined sequence and stored in the memory 130. The images may be referred to as a first frame image, a second frame image, and an Nth frame image according to a time order. The above-described example illustrates a case in which numbers increase in the time order, but the order is not limited thereto and may be configured in a reverse order or an arbitrary order. The frame images stored on a frame-by-frame basis may include time information (e.g., a timestamp) for each frame.

According to an embodiment, the electronic device 101 may obtain characteristic information of the animation content (430). According to an embodiment, the electronic device 101 may obtain characteristic information of an object included in the first image frame of the animation content. In addition, according to an embodiment, the electronic device 101 may obtain characteristic information of an object included in at least one candidate image frame other than the first image frame. The characteristic information is used to generate a characteristic difference value, which is a difference of an object included in image frames, and may include at least one of size information of the object, edge information of the object, saturation information of the object, or brightness information of the object.

According to an embodiment, the electronic device 101 may additionally obtain metadata of the animation content in addition to the characteristic information of the object.

According to an embodiment, the electronic device 101 may determine at least one candidate image frame (440). According to an embodiment, the electronic device 101 may extract an object included in the first image frame based on the characteristic information. For example, the electronic device 101 may extract an object included in the first image frame using a cropping method, extract objects from remaining image frames among the multiple image frames, and determine, as the at least one candidate image frame, an image frame in which an object identical to the object extracted from the first image frame is present.

According to an embodiment, the electronic device 101 may generate a recovery map (450). The recovery map may be generated based on the characteristic information and at least one candidate image frame. According to an embodiment, the electronic device 101 may obtain first characteristic information of an object included in the first image frame and obtain second characteristic information of an object included in at least one candidate image frame. According to an embodiment, the electronic device 101 may obtain a characteristic difference value, which is recovery data, based on the first characteristic information and the second characteristic information, and generate the recovery map based on the characteristic difference value. Here, the characteristic difference value corresponds to a segment-specific characteristic difference of the same object across different image frames. For example, the characteristic difference value may be a brightness difference value of the same object. As another example, the characteristic difference value may be a saturation difference value of the same object.

According to an embodiment, the recovery map may include pixel-specific adjustment values of an image frame for adjusting a color of an object included in the first image frame. The color is a concept including hue, brightness, and saturation. According to an embodiment, by applying the recovery map to the first image frame, the electronic device 101 may generate a second image frame in which an object having at least one of adjusted hue, brightness, or saturation is displayed.

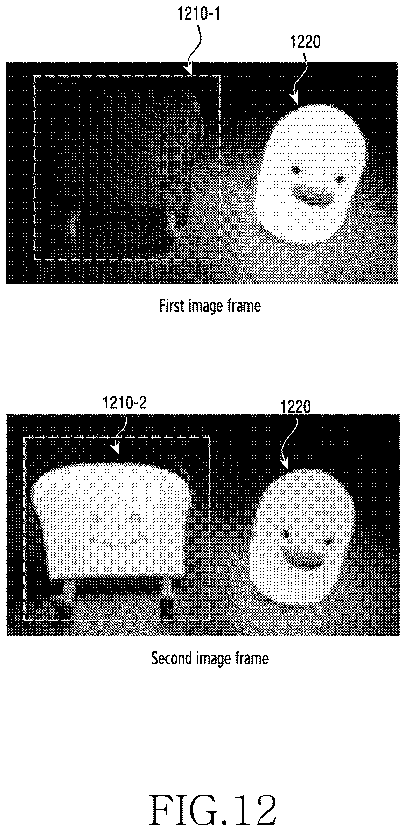

According to an embodiment, the electronic device 101 may provide a second image frame to which the recovery map is applied 460. The electronic device 101 may apply the recovery map generated in operation 450 to the first image frame to provide an image having different brightness or saturation. For example, when a brightness of an object included in the first image frame is 2, a brightness of an object included in the second image frame may be 8. An example of the second image frame obtained by applying the recovery map to the first image frame may be referred to with reference to FIG. 12.

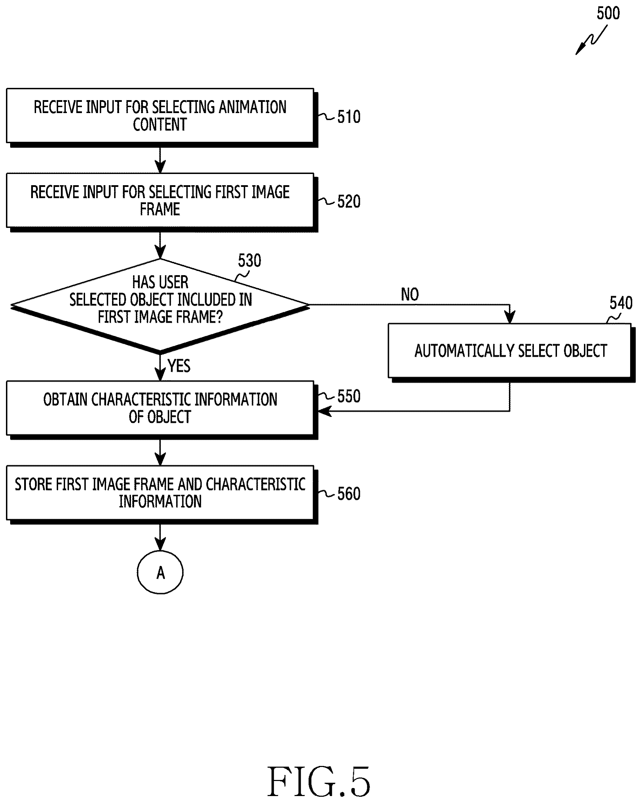

FIG. 5 is a flowchart 500 illustrating a method of processing a first image frame in a method of operating an electronic device according to an embodiment.

According to an embodiment, the electronic device 101 receives an input for selecting animation content (510) and receives an input for selecting a first image frame (520).

When the first image frame is selected, the electronic device 101 according to an embodiment determines whether a user has selected an object included in the first image frame (530).

When an object is not selected by the user, the electronic device 101 according to an embodiment automatically selects an object in the first image frame (540). For example, when the animation content is a video, the electronic device 101 according to an embodiment may determine a main object in the image frame by referring to audio information as metadata without relying on a user selection.

When an object is selected by the user or automatically, the electronic device 101 according to an embodiment obtains characteristic information of the object (550).

According to an embodiment, the electronic device 101 stores the first image frame and the characteristic information in the memory 130 (560).

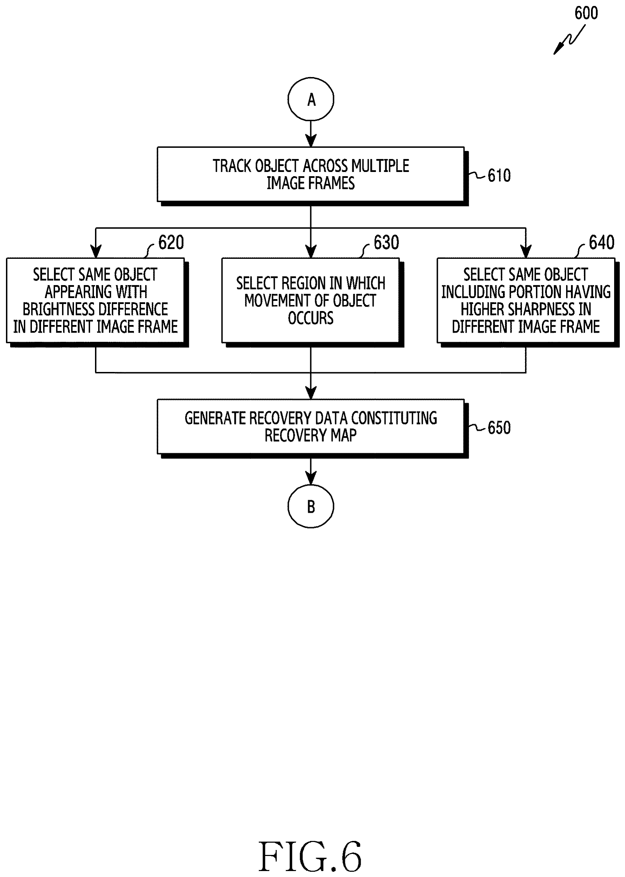

FIG. 6 is a flowchart 600 illustrating a method of generating a recovery map in a method of operating an electronic device according to an embodiment.

According to an embodiment, the electronic device 101 tracks an object across multiple image frames (610). For example, an image captured by a camera may include a frame at a regular time interval, and a difference may occur between a time at which image frames are processed by a processor and a time for performing segmentation. Through segmentation, the processor may estimate and calculate a direction and a speed of movement of an object across the multiple image frames, and may identify a location difference of the object across image frames that occurs according to the movement of the object. According to an embodiment, the electronic device 101 may track a location of the object across the multiple image frames based on segmentation.

According to an embodiment, the electronic device 101 may select the same object appearing with different brightness in a different image frame (620). In addition, according to an embodiment, the electronic device 101 may select a region in which movement of the object occurs (630). In addition, according to an embodiment, the electronic device 101 may select the same object including a portion having higher sharpness in a different image frame (640).

According to an embodiment, the electronic device 101 may generate recovery data constituting a recovery map based on a brightness difference, a movement difference, or a sharpness difference of the same object, obtained in operations 620 to 640 (650). The recovery data is a segment-specific difference value between image frames and may be applied to a first image frame to provide a second image frame.

The recovery map generated as described above may be directly applied to the first image frame. However, when the first image frame selected by a user is not sharp and is thus insufficient to provide an HDR effect, the first image frame may be improved through a series of preprocessing operations. In this regard, a detailed description will be given with reference to FIGS. 7 and 8.

FIG. 7 is a flowchart 700 illustrating a method of modifying a first image frame in a method of operating an electronic device according to an embodiment, and FIG. 8 is a diagram referenced to describe FIG. 7 in further detail.

According to an embodiment, the electronic device 101 obtains a first image frame (710).

When the first image frame is obtained, the electronic device 101 according to one embodiment determines whether the first image frame is an I-frame (720). When a user selects a P-frame or a B-frame as the first image frame from among multiple image frames, the electronic device 101 may replace the selected image frame with an image of a corresponding I-frame or may modify the selected image frame by referring to the I-frame.

If the first image frame is not an I-frame, the electronic device 101 according to an embodiment obtains an I-frame adjacent to the first image frame (760) and may improve image quality of the first image frame using the I-frame (770). In this regard, a detailed description will be provided with reference to FIG. 8.

When the first image frame selected by the user corresponds to a B-frame or a P-frame and an object included in the image is blurred, the electronic device 101 may identify another frame and replace the object with the same object having relatively higher sharpness. The object having higher sharpness may be used in two forms.

As one example, the electronic device 101 may generate a first composite image frame by compositing the original image, which is the first image frame, with an object obtained from an I-frame (②->④). The electronic device 101 may composite two image frames by referring to an object (a smile) of the I-frame with respect to a B-frame including a relatively blurred object (clouds). Accordingly, the first composite image frame may display clouds from the B-frame and a sharp smile from the I-frame. That is, image quality of the first image frame may be improved by an adjacent I-frame.

As another example, the electronic device 101 may use a sharp object (clouds) of another B-frame (ⓐ) as a recovery map (③->④). The electronic device 101 may obtain characteristic information of an object (sharp clouds) of another B-frame as recovery data with respect to a B-frame including a relatively blurred object (blurred clouds). Based on the obtained recovery data (recovery map), the electronic device 101 may provide a second image frame having a dynamically enhanced sharpness effect for the clouds.

According to one embodiment, the electronic device 101 may composite the first image frame with at least one candidate image frame (740).

According to an embodiment, the electronic device 101 may store the first image frame or the first composite image frame in the memory 130 (750).

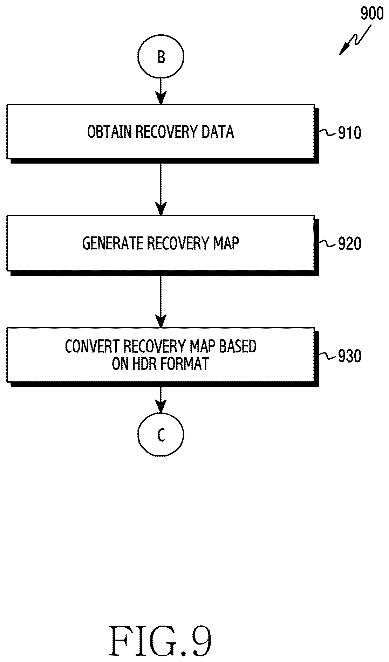

FIG. 9 is a flowchart 900 illustrating a method of converting a recovery map in a method of operating an electronic device according to an embodiment.

According to an embodiment, the electronic device 101 may obtain recovery data (910) and may generate a recovery map based on the recovery data (920).

According to an embodiment, the recovery map may determine, based on a characteristic difference value, object-specific image quality control values for brightness, saturation, and hue of a first image frame.

According to an embodiment, the recovery map may determine, based on the characteristic difference value, location information of an object-specific segment such that an object included in the first image frame is dynamically displayed.

According to an embodiment, the electronic device 101 may convert the recovery map based on an HDR format (930). Specifically, to provide HDR content, the electronic device 101 may store the first image frame and the recovery map as data in the memory 130 in accordance with a Photo-HDR format or a JPEG-R format to provide HDR content.

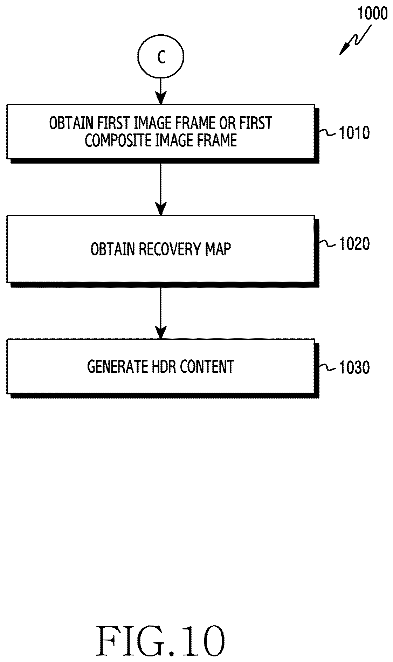

FIG. 10 is a flowchart 1000 illustrating a method of generating HDR content in a method of operating an electronic device according to an embodiment.

According to an embodiment, the electronic device 101 may obtain a first image frame or a first composite image frame (1010).

According to an embodiment, the electronic device 101 may obtain a recovery map together with the first image frame (or the first composite image frame)

(1020). According to an embodiment, the recovery map is generated based on a difference value between the first image frame and another image frame, and may provide an aesthetic change effect or a dynamic change effect for the first image frame. As a concept distinguished from recovery maps according to various embodiments, there is a basic recovery map. The basic recovery map refers to a difference between raw data and image quality control values for an image scene (e.g., a brightness adjustment value and a white balance adjustment value). The difference between an initial value of the raw data and a control value differs from the recovery map herein in that the difference is generated within the same image frame.

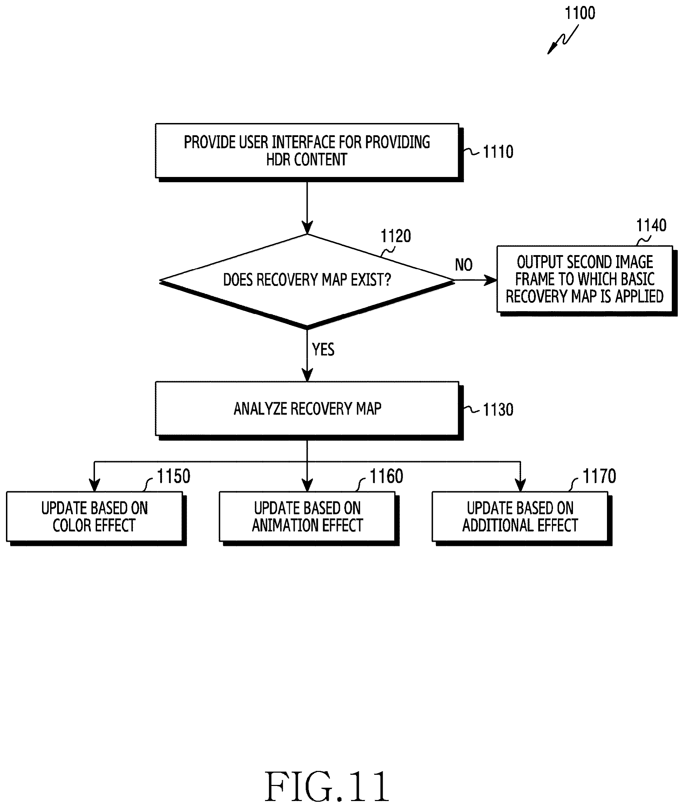

According to an embodiment, the electronic device 101 may generate HDR content (1030). A method of providing HDR content will be described in detail with reference to FIG. 11.

FIG. 11 is a flowchart 1100 illustrating a method of providing HDR content in a method of operating an electronic device according to an embodiment.

According to an embodiment, the electronic device 101 may provide a user interface for providing HDR content (1110). An application that provides the user interface may display, on a display, a first image frame selected by a user and allow the user to select which effect is to be applied to the first image frame. For example, the application may receive a user input for changing brightness or saturation of an object included in the first image frame. As another example, the application may receive a user input for applying a dynamic effect to an object included in the first image frame.

According to an embodiment, the electronic device 101 may determine whether a recovery map exists while providing the user interface (1120).

According to an embodiment, when the recovery map does not exist, the electronic device 101 may output a second image frame to which a basic recovery map is applied (1140), or, when the basic recovery map does not exist, may provide, onto a screen, information indicating that no recovery map exists.

According to an embodiment, when the recovery map exists, the electronic device 101 may analyze the recovery map (1130) and update the second image frame based on a color effect (1150), update the second image frame based on an animation effect (a dynamic effect) (1160), or update the second image frame based on an additional effect (1170).

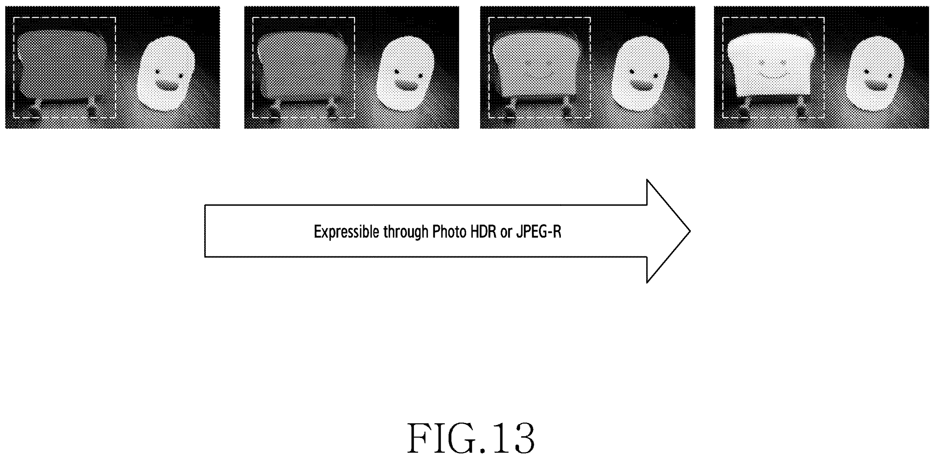

FIG. 12 illustrates an example of a second image frame in HDR content according to an embodiment. FIG. 13 illustrates an example of step-by-step adjustment of a second image frame in HDR content according to an embodiment.

FIG. 12 corresponds to an example in which a recovery map according to an embodiment provides a brightness difference effect for an object. A first image frame includes a first object 1210-1 and a second object 1220, and a second image frame includes the first object 1210-2 and the second object 1220 having different brightnesses.

According to an embodiment, the second image frame is obtained by applying the recovery map to the first image frame, and a brightness of the first object 1210-1 is adjusted based on a characteristic difference value. The brightness of the first object 1210-1 may be adjusted by referring to brightness information of an object included in a candidate image frame among multiple image frames. According to an embodiment, the electronic device 101 may generate the second image frame by adjusting the brightness of an object included in the first image frame, based on the recovery map.

By applying the embodiment of FIG. 12, the electronic device 101 according to an embodiment may generate a second image frame by adjusting saturation of an object included in the first image frame based on the recovery map.

Referring to FIG. 13, according to an embodiment, the electronic device 101 may adjust an image quality control value of an object included in a second image frame in a step-by-step manner. According to an embodiment, the electronic device 101 may adjust the second image frame based on a user input to a user interface by adjusting at least one of brightness or saturation of the object according to multiple levels.

According to an embodiment, an electronic device may include a memory configured to store animation content including multiple image frames, a display module configured to display the animation content and provide a user interface through which one of the multiple image frames is selected, and at least one processor electrically connected to the memory and the display module. The at least one processor may store, in the memory, a first image frame selected from among the multiple image frames, obtain characteristic information of an object included in the first image frame, determine, based on the characteristic information, at least one candidate image frame from among the multiple image frames, the at least one candidate image being other than the first image frame, generate a recovery map based on the characteristic information and the at least one candidate image frame, and provide a second image frame obtained by applying the recovery map to the first image frame.

According to an embodiment, the characteristic information may include at least one of size information of the object, edge information of the object, saturation information of the object, or brightness information of the object.

According to an embodiment, the at least one processor may obtain first characteristic information of an object included in the first image frame, obtain second characteristic information of an object included in the at least one candidate image frame, obtain a characteristic difference value based on the first characteristic information and the second characteristic information, and generate the recovery map based on the characteristic difference value.

According to an embodiment, the at least one processor may receive, through the user interface, a first user input for selecting the first image frame, and when the first image frame is selected, receive a second user input for selecting one object from among one or more objects included in the first image frame.

According to an embodiment, the animation content may include at least one of a video file, a graphics interchange format (GIF) file, or a motion photo.

According to an embodiment, the at least one processor may, when the animation content is a video file, obtain metadata including at least one of a timestamp, location information, or audio information of the animation content, and determine an object included in the first image frame based on the metadata.

According to an embodiment, the at least one processor may generate the second image frame by adjusting brightness of an object included in the first image frame based on the recovery map.

According to an embodiment, the at least one processor may generate the second image frame by adjusting saturation of an object included in the first image frame based on the recovery map.

According to an embodiment, the at least one processor may adjust the second image frame based on a user input to the user interface by adjusting at least one of brightness or saturation of an object according to multiple levels.

According to an embodiment, the at least one processor may control the display module to dynamically provide the second image frame according to the multiple levels.

According to an embodiment, a method of operating an electronic device may include providing animation content including multiple image frames, storing a first image frame selected from among the multiple image frames, obtaining characteristic information of an object included in an image frame, determining, based on the characteristic information, at least one candidate image frame from among the multiple image frames, the at least one candidate image being other than the first image frame, generating a recovery map based on the characteristic information and the at least one candidate image frame, and providing a second image frame obtained by applying the recovery map to the first image frame.

According to an embodiment, the characteristic information may include at least one of size information of the object, edge information of the object, saturation information of the object, or brightness information of the object.

According to an embodiment, the obtaining of characteristic information of an object included in an image frame may include obtaining first characteristic information of an object included in the first image frame, obtaining second characteristic information of an object included in the at least one candidate image frame, obtaining a characteristic difference value based on the first characteristic information and the second characteristic information, and generating the recovery map based on the characteristic difference value.

According to an embodiment, the storing of the first image frame selected from among the multiple image frames may include receiving, through the user interface, a first user input for selecting the first image frame, and when the first image frame is selected, receiving a second user input for selecting one object from among one or more objects included in the first image frame.

According to an embodiment, the animation content may include at least one of a video file, a GIF file, or a motion photo.

According to an embodiment, the method of operating the electronic device may further include, when the animation content is a video file, obtaining metadata including at least one of a timestamp, location information, or audio information of the animation content, and determining an object included in the first image frame based on the metadata.

According to an embodiment, the providing of the second image frame may include generating the second image frame by adjusting brightness of an object included in the first image frame based on the recovery map.

According to an embodiment, the providing of the second image frame may include generating the second image frame by adjusting saturation of an object included in the first image frame based on the recovery map.

According to an embodiment, the method of operating the electronic device may further include adjusting the second image frame based on a user input to the user interface by adjusting at least one of brightness or saturation of an object according to multiple levels.

According to an embodiment, the method of operating the electronic device may further include controlling the display module to dynamically provide the second image frame according to the multiple levels.

## Claims

1. An electronic device comprising:
a display;
a memory configured to store at least one instruction; and
a processor configured to execute the at least one instruction stored in the memory,
wherein the processor is configured to:
control the display to display a user interface for providing content comprising multiple image frames;
receive, through the user interface, a user input for selecting a first image frame, which is one of the multiple image frames, and obtain characteristic information of an object included in the first image frame;
based on the characteristic information, determine at least one candidate image frame other than the first image frame among the multiple image frames;
based on the characteristic information and the at least one candidate image frame, generate a recovery map for adjusting color of the object; and
provide a second image frame obtained by applying the recovery map to the first image frame.

2. The electronic device of claim 1, wherein the characteristic information comprises at least one of size information of the object, edge information of the object, saturation information of the object, or brightness information of the object.

3. The electronic device of claim 2, wherein the at least one processor is configured to:
obtain first characteristic information of an object included in the first image frame;
obtain second characteristic information of an object included in the at least one candidate image frame;
based on the first characteristic information and the second characteristic information, obtain a characteristic difference value; and
based on the characteristic difference value, generate the recovery map.

4. The electronic device of claim 1, wherein the at least one processor is configured to:
receive, through the user interface, a first user input for selecting the first image frame; and
in case that the first image frame is selected, receive a second user input for selecting one of at least one object included in the first image frame.

5. The electronic device of claim 1, wherein the content comprises at least one of a video file, a graphics interchange format (GIF) file, or a motion photo.

6. The electronic device of claim 5, wherein the at least one processor is configured to:
in case that the content is a video file, obtain metadata comprising at least one of a timestamp, location information, or audio information of the content; and
based on the metadata, determine an object included in the first image frame.

7. The electronic device of claim 3, wherein the at least one processor is configured to, based on the recovery map, generate the second image frame by adjusting brightness of an object included in the first image frame.

8. The electronic device of claim 3, wherein the at least one processor is configured to, based on the recovery map, generate the second image frame by adjusting saturation of an object included in the first image frame.

9. The electronic device of claim 7, wherein the at least one processor is configured to, based on a user input to the user interface, adjust the second image frame by adjusting at least one of brightness of the object or saturation of the object according to multiple levels.

10. The electronic device of claim 9, wherein the at least one processor is configured to control the display module to dynamically provide the second image frame according to the multiple levels.

11. A method of operating an electronic device, the method comprising:
controlling a display to display a user interface for providing content comprising multiple image frames;
receiving, through the user interface, a user input for selecting a first image frame which is one of the multiple image frames;
obtaining characteristic information of an object included in the image frame;
based on the characteristic information, determining at least one candidate image frame other than the first image frame among the multiple image frames;
based on the characteristic information and the at least one candidate image frame, generating a recovery map for adjusting color of the object; and
providing a second image frame obtained by applying the recovery map to the first image frame.

12. The method of claim 11, wherein the characteristic information comprises at least one of size information of the object, edge information of the object, saturation information of the object, or brightness information of the object.

13. The method of claim 12, wherein the obtaining of the characteristic information of the object included in the first image frame comprises:
obtaining first characteristic information of an object included in the first image frame;
obtaining second characteristic information of an object included in the at least one candidate image frame;
based on the first characteristic information and the second characteristic information, obtaining a characteristic difference value; and
based on the characteristic difference value, generating the recovery map.

14. The method of claim 11, wherein the receiving of a user input for selecting a first image frame, which is one of the multiple image frames, through the user interface comprises:
receiving, through the user interface, a first user input for selecting the first image frame; and
in case that the first image frame is selected, receiving a second user input for selecting one of at least one object included in the first image frame.

15. The method of claim 11, wherein the content comprises at least one of a video file, a GIF file, or a motion photo.
